# FASCICULE DE BREVET EUROPEEN

(11) **EP 1 521 027 B1**
(45) Date de publication et mention de la délivrance du brevet: **01.03.2006**
(21) Numéro de dépôt: 04022917.1
(22) Date de dépôt: 27.09.2004
(51) Int. Cl.: F16L 37/091

(54) **Dispositif de démontage pour connexion instantanée**
Demontiereinrichtung für Schnellkupplung
Disconnection device for quick coupling

(30) Priorité: 02.10.2003 FR 0311569
(43) Date de publication de la demande: 06.04.2005
(73) Titulaire: COMAP, 69008 Lyon (FR)
(72) Inventeur: Le Clinche, Pascal, 69008 Lyon (FR)
(74) Mandataire: Maureau, Philippe

(56) Documents cités:
- DE-U- 20 119 713
- GB-A- 2 146 400
- US-B1- 6 517 124

## Description

La présente invention concerne une connexion instantanée démontable pour tubes.

De façon connue, une connexion instantanée pour tubes permet de relier deux tubes en introduisant leur extrémité dans deux orifices de la connexion, chaque tube étant maintenu mécaniquement en position dans la connexion par des moyens dédiés, par exemple par une bague solidaire de la connexion, munie de dents orientées vers l'intérieur de la connexion et coopérant avec la paroi du tube pour empêcher le démontage de celui-ci.

Dans une connexion instantanée démontable, afin de pouvoir démonter ultérieurement un tube, c'est-à-dire de retirer son extrémité d'un orifice de la connexion, des dispositifs de démontage ont été décrit, par exemple dans les documents EP 0 737 832 ou GB 2 146 400 utilisant notamment un poussoir destiné à écarter les dents de la bague, ce poussoir étant mis en mouvement manuellement ou avec un outil dédié.

Toutefois, les dispositifs décrits impliquent l'application d'une force importante pour obtenir un déplacement axial du poussoir à l'encontre de la contrainte exercée par les dents, ce qui complique le démontage, en impliquant soit l'utilisation d'un outil spécifique, soit une manipulation manuelle difficile.

La présente invention permet de résoudre ce problème technique en fournissant une connexion instantanée démontable d'une façon simple, facile d'utilisation et sans effort, n'augmentant pas le nombre de pièces nécessaires et ne nécessitant pas d'outil de démontage.

A cet effet, la présente invention a pour objet une connexion instantanée démontable pour tube comportant un corps comprenant au moins un orifice cylindrique permettant l'introduction de l'extrémité d'un tube, cet orifice cylindrique étant équipé d'une bague d'accrochage comportant des dents dirigées de façon oblique vers l'axe de l'orifice et vers l'intérieur de celui-ci et destinées à coopérer avec la paroi du tube pour prévenir la sortie du tube de l'orifice, des moyens de démontage permettant d'agir sur la bague d'accrochage afin de permettre la sortie du tube de l'orifice en supprimant la contrainte exercée par les dents de la bague sur la paroi du tube,

caractérisée en ce que les moyens de démontage comportent :
- une coiffe montée de façon pivotante sur le corps autour de l'axe de l'orifice, et comportant une partie cylindrique présentant au moins une rampe,
- un poussoir coaxial à la coiffe, situé dans le corps, de forme générale cylindrique et comportant au moins une patte destinée à prendre appui sur une rampe de la coiffe, et une partie d'extrémité destinée à prendre appui contre les dents de la bague d'accrochage pour les écarter de la paroi du tube, et
- des moyens de guidage en translation du poussoir suivant l'axe de l'orifice.

Grâce à cette disposition, le déplacement axial du poussoir à l'intérieur d'une connexion est obtenu par la transformation du mouvement de rotation de la coiffe en mouvement de translation, grâce aux rampes hélicoïdales et aux moyens de maintien du poussoir dans un mouvement de translation. Cette disposition permet une démultiplication entre le mouvement de la coiffe et du poussoir qui diminue la force nécessaire pour réaliser le démontage. Ce mouvement ainsi obtenu de façon simple, sans effort important permet d'agir sur la bague d'accrochage afin de déconnecter le tube.

Avantageusement, les moyens de guidage en translation du poussoir par rapport au corps comprennent au moins une rainure parallèle à l'axe de l'orifice ménagée dans la paroi intérieure du corps, au moins une des pattes du poussoir étant destinée à se loger dans cette rainure.

Selon un mode de réalisation, chaque patte du poussoir est à la fois en contact avec une rampe de la coiffe et logée dans une rainure ménagée dans la paroi intérieure du corps.

Cette disposition permet d'obtenir la transformation du mouvement de rotation de la coiffe en un mouvement de translation du poussoir en utilisant les pattes du poussoir qui assurent à la fois le maintien en translation dans les rainures du corps et la transmission du mouvement de la coiffe par contact avec les rampes de la coiffe.

Avantageusement, chacune des rampes de la coiffe possède une forme hélicoïdale, formant un angle avec le plan perpendiculaire à l'axe de l'orifice inférieur à 45°.

La démultiplication du mouvement du poussoir par rapport à la coiffe dépend de l'angle des rampes. Plus cet angle est faible, plus la démultiplication est élevée.

Selon un mode de réalisation, la coiffe possède des moyens élastiques exerçant une contrainte à l'opposée du sens de rotation permettant d'enfoncer le poussoir dans l'orifice.

Cette disposition permet de ramener la coiffe dans sa position angulaire initiale lorsque l'utilisateur n'impose pas de contrainte sur celle-ci.

Avantageusement, au moins un joint d'étanchéité est logé dans l'orifice.

Selon un mode de réalisation, la coiffe présente un aspect de surface extérieure facilitant sa saisie, notamment des cannelures.

Avantageusement, la partie cylindrique de la coiffe comportant des rampes est située à l'intérieur du corps.

Selon un mode de réalisation, la coiffe comporte au moins trois rampes et le poussoir comporte au moins trois pattes correspondantes, ces pattes étant situées de préférence à intervalle régulier sur la périphérie du poussoir.

Cette disposition est avantageuse car les points d'appui du poussoir sont positionnés de façon isostatique.

L'invention sera mieux comprise à l'aide de la description qui suit, en référence au dessin schématique annexé représentant une forme d'exécution de cette connexion.

La figure 1 en est une vue en perspective éclatée d'une partie des pièces.

La figure 2 en est une vue en coupe a échelle agrandie selon II-II de figure 1.

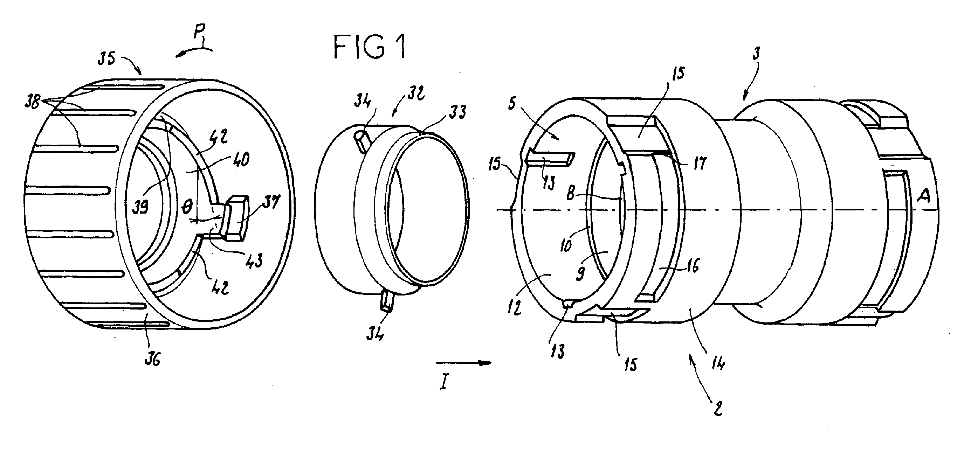

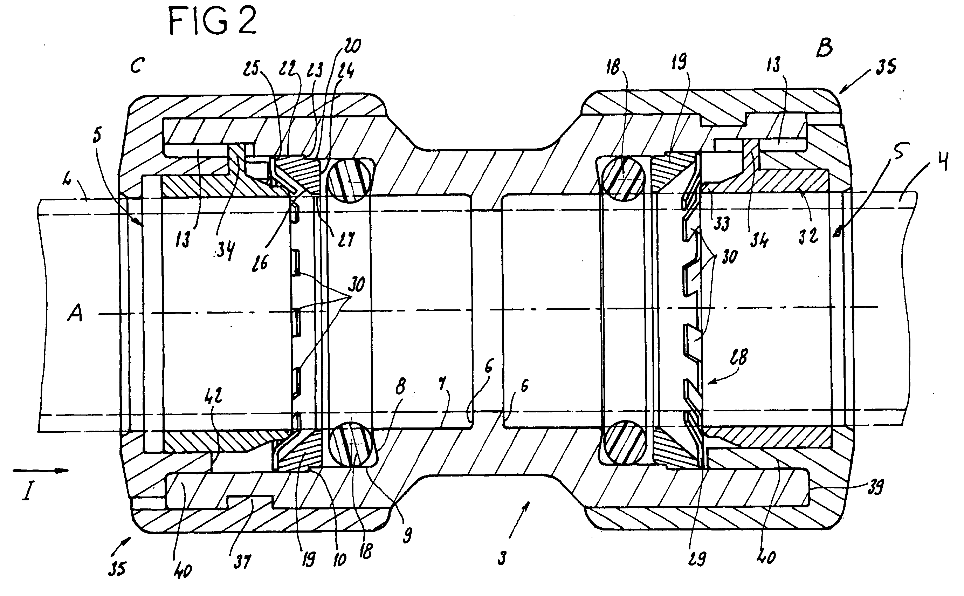

La connexion 2 représentée sur les figures 1 et 2 comporte un corps 3 de forme générale cylindrique d'axe de symétrie A. Cette connexion est destinée à connecter deux tubes 4 représentés en trait mixtes sur la figure 2.

Le corps 3 comporte à ses deux extrémités deux orifices cylindriques 5 symétriques d'axe A, chacun de ces deux orifices 5 permettant de chacun de recevoir l'extrémité d'un tube 4. Ces deux orifices 5 sont reliés au centre du corps par une ouverture circulaire, dont le bord délimite une butée 6, pour chaque extrémité de tube 4.

Chaque orifice 5 présente sur sa paroi intérieure, en amont de la butée 6 par rapport au sens d'introduction du tube 4 représenté pour chaque ouverture par la flèche I:
- une première portion cylindrique intérieure 7 de diamètre sensiblement égal au diamètre du tube 4, permettant son maintien en position centrée par rapport à l'axe A,
- un premier épaulement intérieur 8 résultant d'une augmentation du diamètre intérieur de l'orifice 5,
- une seconde portion cylindrique intérieur 9,
- un second épaulement intérieur 10 constituant une seconde augmentation du diamètre intérieur de l'orifice 5, et
- une troisième portion cylindrique intérieur 12, qui s'étend jusqu'au bord extérieur de l'orifice 5.

Trois rainures intérieures axiales 13, disposées à 120° les unes des autres par rapport à l'axe A, sont ménagées parallèlement à cet axe A dans la paroi intérieure du corps 3, au niveau de la troisième portion cylindrique 12, ces rainures 13 s'étendant jusqu'au bord extérieur de l'orifice 5.

La paroi extérieure du corps comporte, à proximité de ses extrémités correspondant au bord extérieur de chaque orifice 5 une portion cylindrique extérieure 14.

Cette portion cylindrique extérieure 14 de la paroi extérieure du corps comporte trois rainures extérieures axiales 15, disposées à 120° les unes des autres par rapport à l'axe A, et ménagées parallèlement à cet axe A dans la paroi extérieure du corps 3, chaque rainure 15 s'étendant jusqu'au bord extérieur de l'orifice 5 dans un sens, et débouchant dans le sens opposé sur un rainure radiale 16, dont elle est séparée par une butée 17 axiale. Chaque rainure extérieure 15 ne débouche que sur une rainure radiale 16.

Dans chaque orifice 5 est logé un joint d'étanchéité 18 prenant appui radialement sur la seconde portion cylindrique intérieure 9.

Une bague de maintien 19 est ensuite logée dans l'orifice 5, cette bague présentant une paroi extérieure comportant un épaulement 23 de forme complémentaire au second épaulement intérieur 10 du corps 3, cet épaulement délimitant deux portions cylindriques 20 et 22, la seconde portion cylindrique 22 étant de diamètre plus important que la portion cylindrique 20.

La bague de maintien 19 est ainsi destinée à se loger dans l'orifice avec :
- sa première portion cylindrique 20 prenant appui radialement sur la seconde portion cylindrique intérieure 9 du corps 3,
- sa seconde portion cylindrique 22 prenant appui radialement sur la troisième portion cylindrique intérieure 12 du corps 3, et
- l'épaulement 23 prenant appui axialement sur le second épaulement intérieur 10.

Cette disposition garantit le positionnement de la bague de maintien 19 au niveau du second épaulement intérieur 10. La bague de maintien ainsi disposée délimite axialement avec sa face avant 24 dans le sens d'introduction I une gorge dans laquelle est logé le joint 18, l'autre paroi axiale de cette gorge étant constituée par le premier épaulement intérieur 8.

La bague de maintien 19 comporte une face arrière 25 dont le diamètre intérieur est supérieur à celui de la face avant et une portion concave 26 formant en section par un plan contenant l'axe A un segment oblique, le diamètre intérieur de cette portion concave 26 diminuant dans le sens d'introduction, entre la face arrière 25 et en allant vers une portion cylindrique 27 reliant la portion concave 26 à la face avant 24. Le diamètre intérieur de la portion cylindrique 27 est sensiblement égal au diamètre extérieur du tube 4.

Une bague d'accrochage 28 est logée dans l'orifice 5, cette bague comprenant :
- une partie annulaire 29 prenant appui radialement sur la troisième portion cylindrique intérieure 12 du corps 3 et étant en butée axiale contre la face avant de la bague de maintien 19, et
- une pluralité de dents d'accrochage 30 dont la base est solidaire de la partie annulaire 29 et l'extrémité est orienté de façon oblique vers l'intérieur de l'orifice 5 et vers l'axe A.

Un poussoir 32 de forme générale cylindrique et présentant une ouverture tubulaire de diamètre sensiblement égal au diamètre d'un tube 4 est également logé dans l'orifice 5, ce poussoir comprenant :
- une portion avant 33, destinée à entre en contact avec les dents d'accrochage 30, dont le diamètre externe diminue à proximité de son bord avant,
- des pattes 34, au nombre de trois, orientées perpendiculairement à l'axe A et espacées régulièrement sur la paroi du poussoir de façon à former entre deux pattes successives un angle de 120°.

L'extrémité de chacune des pattes 34 du poussoir 32 est destinée à être logée dans une rainure intérieure axiale 13 de la troisième portion cylindrique intérieure 12 du corps 3. Cette disposition permet le guidage en translation du poussoir 32 par rapport au corps 3, en évitant la rotation autour de l'axe A du poussoir.

Une coiffe 35 est montée sur le bord de l'orifice 5, cette coiffe comportant :
- une portion cylindrique extérieure 36 d'axe A, de diamètre interne correspondant au diamètre externe de la portion cylindrique extérieure 14 du corps et destinée à être emboîtée sur celle-ci, cette portion cylindrique extérieure comportant trois ergots 37 sur sa paroi intérieure espacés régulièrement sur cette paroi de façon à former entre deux ergots 37 successifs un angle de 120°, et une pluralité de cannelures 38 axiales parallèles à l'axe A sur sa paroi extérieure,
- une partie annulaire 39 d'axe A de diamètre extérieur correspondant au diamètre extérieur de la portion cylindrique extérieure 36, et dont le diamètre intérieur est sensiblement égal au diamètre du tube 4, cette partie annulaire étant reliée à la portion cylindrique extérieure 36 par son bord de diamètre le plus important, et étant destinée à venir en butée contre le bord de l'orifice 5 du corps 3, et
- une jupe cylindrique 40 d'axe A, dont le diamètre extérieur est sensiblement égal au diamètre intérieur de la troisième portion cylindrique intérieure 12 du corps 3 et le diamètre intérieur est sensiblement égal au diamètre extérieur du poussoir 32, cette jupe étant solidaire par son bord arrière dans le sens d'introduction I de la partie annulaire 39, et présentant sur son bord avant trois rampes hélicoïdales 42 chaque rampe étant identique à l'image de la rampe précédente par rotation d'un angle de 120° autour de l'axe A, ces trois rampes étant séparées par des butées axiales 43.

La coiffe 35 est destinée à être positionnée sur le bord de l'orifice 5. Lors du montage, chaque ergot 37 est positionné en regard d'une rainure extérieure axiale 15 de la portion cylindrique extérieur du corps 3, puis la coiffe est déplacée en translation dans le sens d'introduction I, jusqu'à ce que les ergots 37 atteignent l'extrémité de la rainure extérieure axiale 15 correspondante. La coiffe est alors tournée autour de l'axe A dans le sens positif P indiqué sur la figure 1 de façon à ce que chaque ergot 37 passe la butée axiale 17 et soit logé dans une rainure extérieure radiale 16 du corps 3.

Dans cette position, qui est la position d'utilisation, la coiffe est montée de façon à ne pouvoir se déplacer qu'en rotation par rapport au corps 3 autour de l'axe A, cette rotation étant limitée par la course de chaque ergot 37 dans une rainure extérieure radiale 16 entre la butée axiale 15 et le bord de la rainure extérieure radiale 16 opposé à la butée radiale 17.

D'autre part, le poussoir 32 est logé dans la jupe cylindrique 40, chacune des pattes 34 prenant appui sur une rampe hélicoïdale 42 de cette jupe 40.

Chacune des pattes 34 du poussoir 32 est donc à la fois logée par son extrémité dans une rainure intérieure axiale 13 du corps 3 et en contact avec une rampe hélicoïdale 42.

Lorsqu'un tube 4 est monté dans l'orifice 5, son extrémité est en contact contre la butée 6, et sa paroi extérieure est en contact avec les dents d'accrochage 30 qui empêchent son démontage en s'opposant au déplacement du tube à l'opposé du sens d'introduction I. Cette disposition est illustrée sur l'ouverture 5 du côté B sur la figure 2.

Pour réaliser le démontage du tube, la contrainte exercée par les dents d'accrochage 30 sur la paroi du tube doit être diminuée. Pour cela, il suffit de façon manuelle, de faire tourner la douille 35 dans le sens positif P par rapport à l'axe A. Les rampes hélicoïdales 42 s'épaississant dans le sens positif de rotation P, les ergots 37, en contact avec ces rampes, sont poussés dans le sens d'introduction I, car ils sont de plus contraint à se déplacer dans les rainures axiales intérieures 13. Le poussoir 32 se déplace en translation selon l'axe A dans le sens d'introduction I, jusqu'à une position telle qu'illustrée du coté C de la figure 2, dans laquelle la portion avant 33 du poussoir 32 est en contact avec les dents d'accrochage 30 et pousse celles-ci dans le sens d'introduction I en éloignant radialement leur extrémité de la paroi du tube 4. Le démontage du tube est alors possible.

La forme de la portion concave 26 de la bague de maintien 19 ménage un espace de débattement pour le déplacement des dents 30.

La manipulation manuelle de la coiffe 35 est rendue possible par la démultiplication réalisée par les rampes hélicoïdales 42 et garantit un déplacement limité du poussoir 32 par rapport à une rotation donnée de la coiffe 35. A cet effet, l'angle θ de la rampe par rapport à un plan perpendiculaire à l'axe A doit avoir une valeur de préférence inférieure à 45°.

La présence de cannelures 38 sur la coiffe 35 facilite sa prise en main.

Des moyens élastiques non représentés permettent de ramener la coiffe 35 dans sa position angulaire initiale lorsque l'utilisateur n'applique pas de contrainte sur celle-ci. Ces moyens sont constitués d'un ressort présent entre le corps 3 et la coiffe 35 ou font partie de l'un de ces éléments.

Le retour du poussoir dans sa position initiale est assuré par l'élasticité des dents de la bague d'accrochage.

L'invention ne se limite pas à la forme d'exécution décrite, elle en embrasse au contraire toutes les variantes. C'est ainsi notamment que les moyens de maintien des pièces en position dans l'orifice 5 et la forme particulière des éléments peut varier.

## Revendications

1. Connexion instantanée (2) démontable pour tube (4) comportant un corps (3) comprenant au moins un orifice cylindrique (5) permettant l'introduction de l'extrémité d'un tube (4), cet orifice cylindrique (5) étant équipé d'une bague d'accrochage (28) comportant des dents (30) dirigées de façon oblique vers l'axe (A) de l'orifice (5) et vers l'intérieur de celui-ci et destinées à coopérer avec la paroi du tube (4) pour prévenir la sortie du tube (4) de l'orifice (5), des moyens de démontage permettant d'agir sur la bague d'accrochage (28) afin de permettre la sortie du tube (4) de l'orifice (5) en supprimant la contrainte exercée par les dents (30) de la bague (28) sur la paroi du tube (4),
**caractérisée en ce que** les moyens de démontage comportent :
- une coiffe (35) montée de façon pivotante sur le corps (3) autour de l'axe (A) de l'orifice (5), et comportant une partie cylindrique (40) présentant au moins une rampe (42),
- un poussoir (32) coaxial à la coiffe (35), situé dans le corps (3), de forme générale cylindrique et comportant au moins une patte (34) destinée à prendre appui sur une rampe (42) de la coiffe (35), et une partie d'extrémité (33) destinée à prendre appui contre les dents (30) de la bague d'accrochage (28) pour les écarter de la paroi du tube (4), et
- des moyens de guidage en translation du poussoir (32) suivant l'axe (A) de l'orifice (5).

2. Connexion (2) selon la revendication 1, **caractérisée en ce que** les moyens de guidage en translation du poussoir (32) par rapport au corps (3) comprennent au moins une rainure (13) parallèle à l'axe (A) de l'orifice (5) ménagée dans la paroi intérieure du corps (3) et **en ce qu'**au moins une des pattes (34) du poussoir (32) est destinée à se loger dans cette rainure (13).

3. Connexion (2) selon la revendication 2, **caractérisée en ce que** chaque patte (34) du poussoir (32) est à la fois en contact avec une rampe (42) de la coiffe (35) et logée dans une rainure (13) ménagée dans la paroi intérieure du corps (3).

4. Connexion (2) selon l'une des revendications 1 à 3, **caractérisée en ce que** chacune des rampes (42) de la coiffe (35) possède une forme hélicoïdale, formant un angle (θ) avec le plan perpendiculaire à l'axe (A) de l'orifice (5) inférieur à 45°.

5. Connexion (2) selon l'une des revendications 1 à 4, **caractérisée en ce que** la coiffe (35) possède des moyens élastiques exerçant une contrainte à l'opposée du sens de rotation (P) permettant d'enfoncer le poussoir (32) dans l'orifice (5).

6. Connexion (2) selon l'une des revendications 1 à 5, **caractérisée en ce qu'**au moins un joint d'étanchéité (18) est logé dans l'orifice (5).

7. Connexion (2) selon l'une des revendications 1 à 6, **caractérisée en ce que** la coiffe (35) présente un aspect de surface extérieure facilitant sa saisie, notamment des cannelures (38).

8. Connexion (2) selon l'une des revendications 1 à 7, **caractérisée en ce que** la partie cylindrique (40) de la coiffe (35) comportant des rampes (42) est située à l'intérieur du corps (3).

9. Connexion (2) selon l'une des revendications 1 à 8, **caractérisée en ce que** la coiffe (35) comporte au moins trois rampes (42) et **en ce que** le poussoir (32) comporte au moins trois pattes (34) correspondantes, ces pattes (34) étant situées de préférence à intervalle régulier sur la périphérie du poussoir (32).

## Patentansprüche

1. Abnehmbare Schnellkupplung (2) für ein Rohr (4), mit einem Körper (3), der zumindest eine zylindrische Öffnung (5) aufweist, welche das Einführen des Endes eines Rohres (4) ermöglicht, wobei die zylindrische Öffnung (5) mit einem Einhakring (28) versehen ist, der Zähne (30) aufweist, die schräg zu der Achse (A) der Öffnung (5) und zu deren Innenseite hin gerichtet sind und dazu vorgesehen sind, mit der Wand des Rohres (4) zusammenzuwirken, um ein Heraustreten des Rohres (4) aus der Öffnung (5) zu verhindern, wobei es eine Demontageeinrichtung ermöglicht, so auf den Einhakring (28) einzuwirken, daß das Heraustreten des Rohres (4) aus der Öffnung (5) ermöglicht wird, indem sie die Spannung aufhebt, welche von den Zähnen (30) des Ringes (28) auf die Wand des Rohres (4) ausgeübt wird,
**dadurch gekennzeichnet,**
**daß** die Demontageeinrichtung folgendes aufweist:
- eine Kappe (35), die so montiert ist, daß sie auf dem Körper (3) nm die Achse (A) der Öffnung (5) verdrehbar ist, und die ein zylindrisches Teil (40) mit mindestens einer Rampe (42) aufweist,
- ein Druckteil (32), das koaxial zu der Kappe (35), innerhalb des Körpers (3), mit einer im allgemeinen zylindrischen Form angeordnet ist und mindestens einen Vorsprung (34) aufweist, der dazu vorgesehen ist, sich gegen eine Rampe (42) der Kappe (35) abzustützen, und das einen Endbereich (33) aufweist, der dazu vorgesehen ist, sich gegen die Zähne (30) des Einhakringes (28) abzustützen, um diese von der Wand des Rohres (4) zu entfernen, und
- Führungseinrichtungen zum translatorischen Führen des Druckteiles (32) entlang der Achse (A) der Öffnung (5).

2. Kupplung (2) nach Anspruch 1,
**dadurch gekennzeichnet,**
**daß** die Führungseinrichtungen zum translatorischen Führen des Druckteiles (32) in Bezug auf den Körper (3) mindestens eine zur Achse (A) der Öffnung (5) parallele Nut (13) aufweisen, die in der Innenwand des Körpers (3) vorgesehen ist,
und **daß** mindestens einer der Vorsprünge (34) des Druckteiles (32) dazu vorgesehen ist, in diese Nut (13) einzugreifen.

3. Kupplung (2) nach Anspruch 2,
**dadurch gekennzeichnet,**
**daß** jeder Vorsprung (34) des Druckteiles (32) zugleich mit einer Rampe (42) der Kappe (35) in Kontakt steht und in eine in der Innenwand des Körpers (3) vorgesehene Nut (13) eingreift.

4. Kupplung (2) nach einem der Ansprüche 1 bis 3,
**dadurch gekennzeichnet,**
**daß** jede der Rampen (42) der Kappe (35) eine Wendelform besitzt, die mit der zur Achse (A) der Öffnung (5) senkrechten Ebene einen Winkel (θ) von weniger als 45° bildet.

5. Kupplung (2) nach einem der Ansprüche 1 bis 4,
**dadurch gekennzeichnet,**
**daß** die Kappe (35) elastische Einrichtungen aufweist, die eine zur Drehrichtung (P) entgegengesetzte Kraft ausüben, welche es ermöglicht, das Druckteil (32) in die Öffnung (5) einzusetzen.

6. Kupplung (2) nach einem der Ansprüche 1 bis 5,
**dadurch gekennzeichnet,**
**daß** mindestens eine Dichtung (18) in die Öffnung (5) eingesetzt ist.

7. Kupplung (2) nach einem der Ansprüche 1 bis 6,
**dadurch gekennzeichnet,**
**daß** die Kappe (35) eine Gestaltung der äußeren Oberfläche aufweist, die ihr Festhalten erleichtert, insbesondere Rillen bzw. Riffelungen (38).

8. Kupplung (2) nach einem der Ansprüche 1 bis 7,
**dadurch gekennzeichnet,**
**daß** das zylindrische Teil (40) der Kappe (35), das Rampen (42) aufweist, im Inneren des Körpers (3) angeordnet ist.

9. Kupplung (2) nach einem der Ansprüche 1 bis 8,
**dadurch gekennzeichnet,**
**daß** die Kappe (35) mindestens drei Rampen (42) aufweist
und **daß** das Druckteil (32) mindestens drei entsprechende Vorsprünge (34) aufweist, wobei die Vorsprünge (34) bevorzugt in einem regelmäßigen Abstand an dem Umfang des Druckteiles (32) angeordnet sind.

## Claims

1. Releasable instantaneous coupling (2) for a pipe (4) comprising a body (3) with at least one cylindrical orifice (5) enabling the end of a pipe (4) to be introduced, this cylindrical orifice (5) being fitted with a hooking ring (28) incorporating teeth obliquely directed towards the axis (A) of the orifice (5) and towards the interior thereof and designed to co-operate with the wall of the pipe (4) to prevent the pipe (4) from coming out of the orifice (5), and releasing means making it possible to act on the hooking ring (28) to enable the pipe (4) to be removed from the orifice (5) by suppressing the force exerted by the teeth (30) of the ring (28) on the wall of the pipe (4),
**characterised in that** the releasing means comprise:
- a cap (35) mounted so as to pivot on the body (3) about the axis (A) of the orifice (5) and having a cylindrical part (40) with at least one ramp (42),
- a pushing mechanism (32) coaxial with the cap (35), located in the body (3) and of a generally cylindrical shape, with at least one tab (34) designed to be supported on a ramp (42) of the cap (35) and an end part (33) designed be supported against the teeth (30) of the hooking ring (28) in order to push them away from the wall of the pipe (4), and
- means for guiding the pushing mechanism (32) in translation along the axis (A) of the orifice (5).

2. Coupling (2) as claimed in claim 1, **characterised in that** the means for guiding the pushing mechanism (32) in translation relative to the body (3) have at least one groove (13) parallel with the axis (A) of the orifice (5) provided in the internal wall of the body (3) and at least one of the tabs (34) of the pushing mechanism (32) is designed to locate in this groove (13).

3. Coupling (2) as claimed in claim 2, **characterised in that** each tab (34) of the pushing mechanism (32) is both in contact with a ramp (42) of the cap (35) and located in a groove (13) provided in the internal wall of the body (3).

4. Coupling (2) as claimed in one of claims 1 to 3, **characterised in that** each of the ramps (42) of the cap (35) is of a helical shape, subtending an angle (θ) of less than 45° with the plane perpendicular to the axis (A) of the orifice (5).

5. Coupling (2) as claimed in one of claims 1 to 4, **characterised in that** the cap (35) has elastic means exerting a force opposite the direction of rotation (P) enabling the pushing mechanism (32) to penetrate the orifice (5).

6. Coupling (2) as claimed in one of claims 1 to 5, **characterised in that** at least one seal (18) is located in the orifice (5).

7. Coupling (2) as claimed in one of claims 1 to 6, **characterised in that** the cap (35) has an external surface aspect making it easier to grip, in particular fluting (38).

8. Coupling (2) as claimed in one of claims 1 to 7, **characterised in that** the cylindrical part (40) of the cap (35) incorporating the ramps (42) is disposed on the inside of the body (3).

9. Coupling (2) as claimed in one of claims 1 to 8, **characterised in that** the cap (35) has at least three ramps (42) and the pushing mechanism (32) has at least three co-operating tabs (34), these tabs (34) being preferably spaced at regular intervals around the periphery of the pushing mechanism (32).
